# EUROPÄISCHE PATENTSCHRIFT

(11) **EP 2 013 651 B1**
(45) Veröffentlichungstag und Bekanntmachung des Hinweises auf die Patenterteilung: **03.10.2018**
(21) Anmeldenummer: 07724481.2
(22) Anmeldetag: 23.04.2007
(51) Int. Cl.: G02B 6/38

(54) **LICHTWELLENLEITERSTECKERTEIL**
OPTICAL WAVEGUIDE PLUG PART
PRISE DE CÂBLE À FIBRES OPTIQUES

(30) Priorität: 28.04.2006 DE 102006019872
(43) Veröffentlichungstag der Anmeldung: 14.01.2009
(73) Patentinhaber: Beckhoff Automation GmbH, 33415 Verl (DE)
(72) Erfinder: SCHUBE, Frank, 51766 Engelskirchen (DE); BECHTEL, Dirk, 33649 Bielefeld (DE); KUCHARSKI, Franz-Joseph, 33335 Gütersloh (DE)
(74) Vertreter: Patentanwaltskanzlei WILHELM & BECK
(86) Internationale Anmeldenummer: PCT/EP2007/003551
(87) Internationale Veröffentlichungsnummer: WO 2007/124883

(56) Entgegenhaltungen:
- EP-A2- 0 290 188
- DE-C1- 10 131 273
- US-A- 4 679 895
- US-A- 5 692 089
- US-A1- 2005 013 547

## Beschreibung

Die Erfindung betrifft ein Lichtwellenleitersteckerteil gemäß dem Oberbegriff von Anspruch 1.

Ein Lichtwellenleitersteckerteil ist beispielsweise aus der DE 101 26 659 A1 bekannt.

Um den Steckerteil wasserdicht auszubilden, wird im Stand der Technik vorgeschlagen, den Lichtwellenleiter in ein in dem Inneren des in den Lichtwellenleitersteckerteils ausgebildetes Innengewinde einzudrehen, das sich in die Isolierung des Lichtwellenleiters einschneidet.

Der bekannte Lichtwellenleitersteckerteil schafft zwar eine gute Abdichtung und einen sicheren Halt des Lichtwellenleiters in dem Lichtwellenleitersteckerteil, hat aber den Nachteil, dass die Herstellung durch das auf den Lichtwellenleiter auszuübende Drehmoment aufwendig und schwierig ist.

Desweiteren sind Lichtwellenleitersteckerteile bekannt, bei denen ein Metallteil in eine Öffnung in dem Lichtwellenleitersteckerteil angeordnet wird und dabei den Kern des Lichtwellenleiters klemmt. Da keine Dichtungselemente vorgesehen sind, sind diese bekannten Lichtwellenleitersteckerteile nicht wasserdicht. Außerdem ist bei diesen bekannten Lichtwellenleitersteckerteilen die durch das Klemmteil bewirkte Zugentlastung des Lichtwellenleiters gering.

Ein Lichtwellenleitersteckerteil gemäß dem Oberbegriff von Anspruch 1 ist aus der EP 0 290 188 A, der US 4 679 895 A und der US 2005/013547 A1 bekannt. Weiterer Stand der Technik ist der US 5 692 089 A und der DE 101 31 273 C1 entnehmbar.

Der Erfindung liegt die Aufgabe zugrunde, ein Lichtwellenleitersteckerteil gemäß dem Oberbegriff von Anspruch 1 anzugeben, das leicht herzustellen ist und eine gute Zugentlastung aufweist.

Die Aufgabe der Erfindung wird mit einem Lichtwellenleitersteckerteil gemäß den Merkmalen von Anspruch 1 gelöst. Vorteilhafte Ausgestaltungen der Erfindung sind in den abhängigen Ansprüchen angegeben.

Gemäß einer Ausführung der Erfindung umfasst ein Lichtwellenleitersteckerteil eines Lichtwellenleitersteckverbinders für einen Lichtwellenleiter, der eine Faser und eine Hülle aufweist, einen Kontaktträger zur Aufnahme des Lichtwellenleiters und zumindest ein Klemmteil zum Sichern des Lichtwellenleiters in dem Kontaktträger, wobei das Klemmteil einen ersten Klemmabschnitt zum Klemmen der Hülle des Lichtwellenleiters und einen zweiten Klemmabschnitt zum Klemmen der Faser des Lichtwellenleiters aufweist.

Dadurch ergibt sich der Vorteil einer einfachen Montage und einer besseren Zugentlastung. Bei Lichtwellenleitern mit Zugentlastungsfasern können diese ebenfalls über die Schneidelemente besser gesichert werden. Es können prinzipiell auch mehrere Klemmteile eingesetzt werden, die jeweils die beiden bzw. einen Klemmabschnitt aufweisen. Bevorzugt wird eine Ausführung mit einem Klemmteil, weil das die Montage und die Abdichtung erleichtert.

Erfindungsgemäß hat der erste Klemmabschnitt Schneidelemente zum Schneiden in die Hülle des Lichtwellenleiters aufweisen. Zusätzlich hat der zweite Klemmabschnitt Schneidelemente zum Schneiden in die Faser des Lichtwellenleiters aufweisen. Dabei können die Schneidelemente vorzugsweise im Wesentlichen senkrecht zur der Richtung verlaufen, in der der Lichtwellenleiter in das Lichtwellenleitersteckerteil einsteckbar bzw. eingesteckt ist.

Gemäß der Erfindung können die Schneidelemente im Querschnitt ein widerhakenartiges Profil aufweisen. Dadurch ergibt sich der Vorteil, dass das Widerhakenprofil derart ausgebildet sein kann, dass einer auf den Lichtwellenleiter ausgeübten Zugkraft entgegengewirkt wird. Es ergibt sich somit eine bessere Zugentlastung, weil das Material der Hülle bzw. der Faserisolierung nicht so leicht über die Schneidelemente rutschen kann. Bei der Montage können die Schneidelemente leicht in die Hülle und/oder die Faserisolierung geschnitten werden, wenn, wie bevorzugt, die Widerhakenstruktur senkrecht zur Schnittrichtung verläuft.

Gemäß einer Ausführung der Erfindung umfasst ein Lichtwellenleitersteckerteil eines Lichtwellenleitersteckverbinders für einen Lichtwellenleiter, der eine Faser und eine Hülle aufweist, einen Kontaktträger zur Aufnahme des Lichtwellenleiters und zumindest ein Klemmteil zum Sichern der Lichtwellenleiters in dem Kontaktträger, wobei zusätzlich zu den oben genannten Merkmalen das Klemmteil und/oder der Kontaktträger zumindest teilweise transparent und/oder transluzent ausgebildet sind.

Erfindungsgemäß kann das Klemmteil vollständig transparent und/oder transluzent ausgebildet sein.

Erfindungsgemäß kann der Kontaktträger zumindest in dem Bereich des Aufnahmeabschnitts für das Klemmteil transparent und/oder transluzent ausgebildet sein.

Erfindungsgemäß kann das Klemmteil und/oder der Kontaktträger zur Kennzeichnung der Position des Lichtwellenleiters in dem Lichtwellenleitersteckerteil farblich markiert sein.
Gemäß einer Ausführung der Erfindung umfasst ein Lichtwellenleitersteckerteil eines Lichtwellenleitersteckverbinders für einen Lichtwellenleiter, der eine Faser und eine Hülle aufweist, einen Kontaktträger zur Aufnahme des Lichtwellenleiters und zumindest ein Klemmteil zum Sichern der Lichtwellenleiters in dem Kontaktträger, wobei zusätzlich zu den oben genannten Merkmalen an dem Klemmteil zumindest eine Dichtung angeordnet ist.

Erfindungsgemäß kann die Dichtung eine O-Ringdichtung sein.

Erfindungsgemäß kann das Klemmteil einen Flansch zur Aufnahme der Dichtung aufweisen.

Erfindungsgemäß kann das Klemmteil eine Nut zur Aufnahme der Dichtung aufweisen. Alternativ oder zusätzlich kann der Kontaktträger eine Nut zur Aufnahme der Dichtung aufweisen. Alternativ oder zusätzlich kann der Kontaktträger eine Stufe zur Aufnahme der Dichtung aufweisen.

Erfindungsgemäß kann die Dichtung entlang der Öffnung des Kontaktträgers angeordnet sein, in der das Klemmteil zur Sicherung des Lichtwellenleiters angeordnet ist bzw. anordbar ist.

Gemäß einer Ausführung der Erfindung umfasst ein Lichtwellenleitersteckerteil eines Lichtwellenleitersteckverbinders für einen Lichtwellenleiter, der eine Faser und eine Hülle aufweist, einen Kontaktträger zur Aufnahme des Lichtwellenleiters und zumindest ein Klemmteil zum Sichern der Lichtwellenleiters in dem Kontaktträger, wobei zusätzlich oder alternativ zu den oben genannten Merkmalen eine (eventuell weitere) Dichtung vorgesehen ist, die derart angeordnet ist, dass die Faser des Lichtwellenleiters durch die Dichtung steckbar ist.

Dies stellt eine alternative oder zusätzliche Lösung zur Anordung der Dichtung dar. Die (weitere) Dichtung wird in den Kontaktträger eingesetzt, der Lichtwellenleiter in das Lichtwellenleitersteckerteil geschoben bzw. gedreht und mit dem Klemmteil gesichert. Vorzugsweise kann die (weitere) Dichtung dabei vom Klemmteil umfasst werden bzw. eine seitliche Anlage bilden.

Erfindungsgemäß kann der Kontaktträger eine seitliche Öffnung zur Aufnahme des zumindest einen Klemmteils aufweisen.

Erfindungsgemäß kann die Außenkontur des Klemmteils im Wesentlichen der Außenkontur des Kontaktträgers entsprechen. Alternativ oder zusätzlich kann die Außenkontur des Klemmteils im Wesentlichen flach ausgebildet sein.

Erfindungsgemäß kann die Außenkontur des Klemmteils gewölbt sein. Diese Ausführung ist bei transparenten oder transluzenten Klemmteilen besonders vorteilhaft, weil die Form vorteilhafterweise derart wählbar ist, dass eine Vergrößerung der Positionsanzeige des Lichtwellenleiters im Kontaktträger möglich ist (Lupenfunktion).

Erfindungsgemäß kann der Kontaktträger einen Querschnitt aufweisen, der im Wesentlichen rund, oval, ellipsenförmig, rechteckig (vorzugsweise mit abgerundeten Ecken) ist.

Erfindungsgemäß kann der Kontaktträger einen Querschnitt aufweisen, der asymmetrisch ist. Die asymmetrische Ausführung des Querschnitts hat den Vorteil, dass eine "Codierung" die richtige Positionierung des Klemmteils sicherstellt. Alternativ kann das Klemmteil auch vollkommen symmetrisch ausgebildet sein, so dass es in beiden Richtungen richtig anordbar ist. Das erleichtert die Montage, bedeutet aber einen größeren Bauraum und höhere Material- und Fertigungskosten.

Erfindungsgemäß kann die Faser einen Kern aus optisch transparenten Material geringer Dämpfung und einen den Kern umschließenden Mantel aufweisen, der eine niedrigere Brechzahl als der Kern hat. Um den Mantel ist eine Isolierung vorgesehen. Vorteilhafterweise weist der Lichtwellenleiter desweiteren Zugentlastungsfasern auf.

Erfindungsgemäß kann der Kern aus Kunststoff oder Glas ausgebildet sein.

Erfindungsgemäß kann der Kontaktträger ein Rohr aufweisen, das vorzugsweise zur Aufnahme der Faser bzw. des Kerns der Faser des Lichtwellenleiters ausgebildet ist.

Erfindungsgemäß kann das Lichtwellenleitersteckerteil eine Kappe aufweisen, die eine Durchtrittsöffnung für den Lichtwellenleiter aufweist und vorzugsweise wasserdicht mit dem Kontaktträger verbindbar ist.

Erfindungsgemäß kann das Lichtwellenleitersteckerteil mit einem Gegensteckerteil zusammensteckbar sein.

Erfindungsgemäß kann das Lichtwellenleitersteckerteil den bzw. die Zapfen oder ein Aufnahmeteil eines Bajonettverschlusses aufweisen.

Erfindungsgemäß kann das Klemmteil aus Metall und/oder Kunststoff ausgebildet sein.

Erfindungsgemäß kann das Klemmteil ein Druckgussteil sein.

Erfindungsgemäß kann der Kontaktträger aus Metall und/oder Kunststoff ausgebildet sein.

Erfindungsgemäß kann das Klemmteil einen Klemmabschnitt zum Klemmen der Faser des Lichtwellenleiters aufweisen.

Erfindungsgemäß kann die Kappe und der Kontaktträger als ein Teil ausgebildet sein.

Erfindungsgemäß kann das Klemmteil und die Dichtung als ein Teil ausgebildet sein.

Erfindungsgemäß kann der Kontaktträger und die Dichtung als ein Teil ausgebildet sein.

Erfindungsgemäß kann der Kontaktträger Gewindeabschnitte zum Einschrauben der Hülle und/oder der Faser des Lichtwellenleiters aufweisen. Diese Befestigung und Zugentlastung kann bei den Ausführungen der Erfindung mit den zumindest zwei Klemmabschnitten des Klemmteils zusätzlich vorgesehen werden. Dann wird der Lichtwellenleiter zunächst in das Lichtwellenleitersteckerteil eingeschraubt und anschließend das Klemmteil in den Kontaktträger geschoben, wobei der Lichtwellenleiter geklemmt wird. Bei den anderen Ausführungen des Lichtwellenleitersteckerteils, die nicht notwendigerweise die beiden Klemmabschnitte aufweisen (ein Klemmabschnitt für die Hülle oder die Faser bzw. kein Klemmabschnitt ist erforderlich) ist es ebenfalls möglich, eine derartige Zugentlastung vorzusehen.

Die Erfindung betrifft auch einen Brückenstecker mit mindestens einem Lichtwellenleitersteckerteil gemäß der Erfindung (bzw. den oben genannten Merkmalen).

Vorzugsweise weist der erfindungsgemäße Brückenstecker zwei erfindungsgemäße Lichtwellenleitersteckerteile auf.

Dabei können vorzugsweise die Klemmteile der beiden Lichtwellenleitersteckerteile miteinander verbunden sein.

Erfindungsgemäß können die Klemmteile der beiden Lichtwellenleitersteckerteile einstückig ausgebildet sein.

Erfindungsgemäß können die Klemmteile der beiden Lichtwellenleitersteckerteile starr miteinander verbunden sein.

Erfindungsgemäß können die Klemmteile der beiden Lichtwellenleitersteckerteile gegenüberliegend angeordnet sind.

Erfindungsgemäß können die Klemmteile der beiden Lichtwellenleitersteckerteile auch flexibel miteinander verbunden sein. Dadurch ergibt sich der Vorteil, dass der Abstand variabel einstellbar ist.

Die Erfindung betrifft auch einen Lichtwellenleitersteckverbinder mit einem Lichtwellenleitersteckerteil, das die oben genannten Merkmale umfasst, und einem Gegensteckerteil.

Erfindungsgemäß kann das Gegensteckerteil einen Schacht zur Aufnahme des Rohrs bzw. des Kerns des Lichtwellenleiters aufweisen.

Die Erfindung wird im folgenden anhand der in den Figuren gezeigten Ausführungsbeispiele näher beschrieben.
- Fig. 1: zeigt eine Explosionszeichung eines Lichtwellenleitersteckerteils mit einem Sockel eines Gegensteckerteils gemäß einer ersten Ausführung der Erfindung.
- Fig. 2: zeigt eine perspektivische Ansicht des Lichtwellenleitersteckerteils gemäß Fig. 1.
- Fig. 3: zeigt eine perspektivische Ansicht des Klemmverschlusses des Lichtwellenleitersteckerteils von Fig. 1.
- Fig. 4: zeigt eine Aufsicht eines Lichtwellenleitersteckverbinders mit einem Lichtwellenleitersteckerteil gemäß Fig. 1.
- Fig. 5: zeigt eine Schnittansicht gemäß der Schnittlinie V-V in Fig. 4.
- Fig. 6: zeigt eine Schnittansicht gemäß der Schnittlinie VI-VI in Fig. 4.
- Fig. 7: zeigt eine Schnittansicht gemäß der Schnittlinie VII-VII in Fig. 6.
- Fig. 8: zeigt eine Schnittansicht gemäß der Schnittlinie VIII-VIII in Fig. 6.
- Fig. 9: zeigt eine der Fig. 1 entsprechende Explosionszeichung eines Lichtwellenleitersteckerteils gemäß einer weiteren Ausführung der Erfindung.
- Fig. 10: zeigt eine perspektivische Ansicht des Klemmverschlusses des Lichtwellenleitersteckerteils von Fig. 9.
- Fig. 11: zeigt eine Aufsicht eines Lichtwellenleitersteckverbinders mit einem Lichtwellenleitersteckerteil gemäß Fig. 9.
- Fig. 12: zeigt eine Schnittansicht gemäß der Schnittlinie XII-XII in Fig. 11.
- Fig. 13: zeigt eine Schnittansicht gemäß der Schnittlinie XIII-XIII in Fig. 11.
- Fig. 14: zeigt eine Schnittansicht gemäß der Schnittlinie XIV-XIV in Fig. 13.
- Fig. 15: zeigt eine der Fig. 1 entsprechende Explosionszeichung eines Lichtwellenleitersteckerteils gemäß einer weiteren Ausführung der Erfindung.
- Fig. 16: zeigt eine perspektivische Ansicht des Klemmverschlusses des Lichtwellenleitersteckerteils von Fig. 15.
- Fig. 17: zeigt eine Aufsicht eines Lichtwellenleitersteckverbinders mit einem Lichtwellenleitersteckerteil gemäß Fig. 15.
- Fig. 18: zeigt eine Schnittansicht gemäß der Schnittlinie XVIII-XVIII in Fig. 17.
- Fig. 19: zeigt eine Schnittansicht gemäß der Schnittlinie XIX-XIX in Fig. 17.
- Fig. 20: zeigt eine Schnittansicht gemäß der Schnittlinie XX-XX in Fig. 19.
- Fig. 21: zeigt eine Seitenansicht eines LichtwellenleiterBrückensteckers gemäß einer Ausführung der Erfindung.
- Fig. 22: zeigt eine Seitenansicht eines LichtwellenleiterBrückensteckers gemäß einer weiteren Ausführung der Erfindung.
- Fig. 23: zeigt eine Seitenansicht eines LichtwellenleiterBrückensteckers gemäß einer weiteren Ausführung der Erfindung in einer zusammengezogenen Stellung.
- Fig. 24: zeigt eine Seitenansicht eines LichtwellenleiterBrückensteckers gemäß einer weiteren Ausführung der Erfindung in einer gestreckten Stellung.
- Fig. 25: zeigt eine Seitenansicht eines Lichtwellenleitersteckerteils gemäß einer Ausführung der Erfindung mit einem Bajonettverschluss.

In der Beschreibung der Ausführungsbeispiele werden folgende Bezugszeichen verwendet:
- 10: Lichtwellenleiter
- 11: Kern (optisch transparentes Material geringer Dämpfung, z.B. Quarzglas, transparenter Kunststoff) mit Mantel (niedrigere Brechzahl als Kern; Kern und Mantel bilden die "optische" Faser)
- 12: Isolierung (auch Faserisolierung)
- 13: Hülle (auch Beschichtung oder Aussenmantel)
Zugentlastungsfasern sind bevorzugt zwischen Hülle und Isolierung vorhanden, werden jedoch der Übersicht halber in der vorliegenden Anmeldung nicht gezeigt.

- 20: Kappe (auch Dichtkappe)
- 21: Dichtlippe
- 22: Schnapprand

- 30: Kontaktträger
- 31: Rohr
- 32: Rohransatz
- 33: Wulst (nach außen ragend)
- 34: Rohrende (tritt in berührende oder fast berührende Anlage mit einem Sende-/Empfangselement)
- 35: Rastelement
- 36: Aussparung

- 40: Klemmteil (zum Klemmen des Lichtwellenleiter in dem Kontaktträger und zum Verschliessen des Kontaktträgers)
- 41: erster Klemmabschnitt (beispielsweise für Hülle 13)
- 42: zweiter Klemmabschnitt (beispielsweise für Isolierung 12)
- 43: Schneidelemente (im ersten Klemmabschnitt 41)
- 44: Schneidelemente (im zweiten Klemmabschnitt 42)
- 45: Flansch
- 46: Rastelement
- 47: Wandung
- 48: Verbindungselement (beispielsweise von zwei Klemmteilen)

- 50: Dichtungselement (O-Ring)

- 60: Sockel
- 61: Sockelwandung
- 62: Schnapprand
- 63: Schacht

- 71: Zapfen (für einen Bajonettverschluss)
- 72: Aufnahmeteil (für einen Bajonettverschluss)

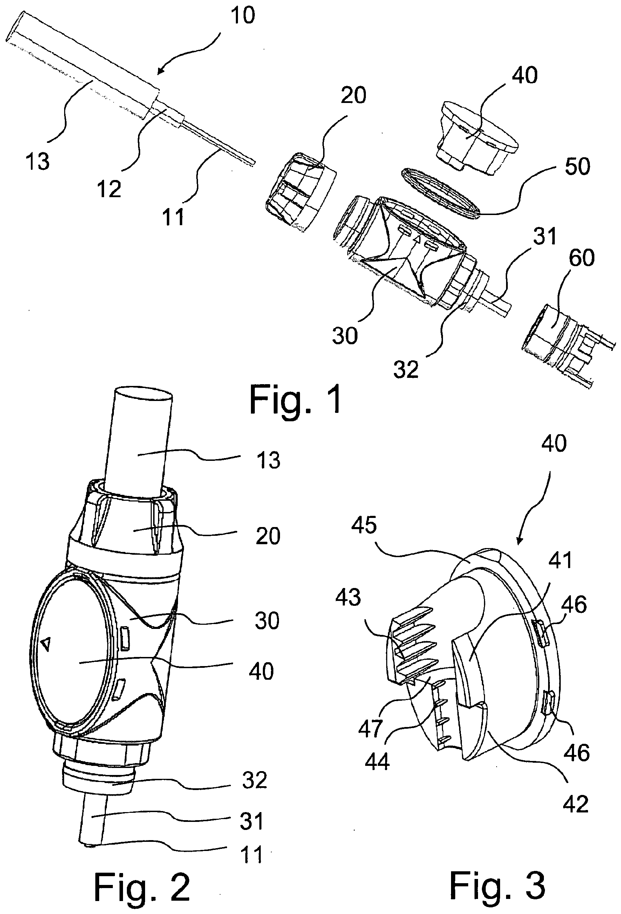

Die Figuren 1 bis 8 zeigen ein erstes Ausführungsbeispiel der Erfindung.

Ein Lichtwellenleiter 10 umfasst einen Kern 11, der von einem Mantel niedrigerer Brechzahl umgeben ist, um den eine Isolierung 12 vorgesehen ist. Um die Isolierung 12 sind nicht dargestellte Zugentlastungsfasern vorgesehen. Desweiteren weist der Lichtwellenleiter eine Hülle 13 auf.

Das in den Fig. 1 bis 8 gezeigte Ausführungsbeispiel der Erfindung umfasst einen Kontaktträger 30, der an dem Lichtwellenleiter 10 befestigt werden kann. Dazu wird der Lichtwellenleiter 10 entsprechend der Darstellung in Fig. 1 abisoliert, die Kappe 20 auf den Lichtwellenleiter 10 geschoben, und der Lichtwellenleiter in den Kontaktträger 30 derart eingeschoben, dass der Kern 11 in das Rohr 31 eingreift. Anschließend wird das Klemmteil 40 mit dem Dichtungselement 50 in die Öffnung in dem Kontaktträger 30 eingesetzt. Das Lichtwellenleitersteckerteil ist somit wasserdicht abgedichtet. Außerdem ist der Lichtwellenleiter sicher und fest in dem Kontaktträger 30 aufgenommen, weil die beiden Klemmabschnitte 41 bzw. 42 mit ihren Schneidelementen 43 bzw. 44 in die Isolierung 12 bzw. die Hülle 13 eingreifen.

Das Klemmteil 40 weist eine ovalen bzw. elliptischen Querschnitt auf. An seinem Außenrand ist ein Flansch 45 vorgesehen, der das Dichtungselement 50 an dem Kontaktträger 30 sichert. Alternative Anordnungen für das Dichtungselement sind denkbar.

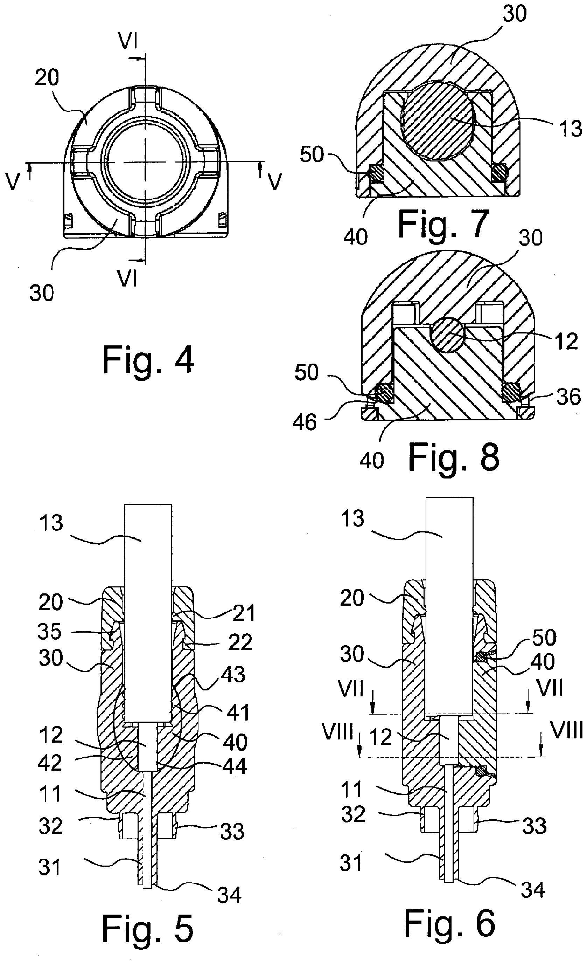

An seinem Außenrand weist das Klemmteil 40 ferner Rastelemente 46 auf, die in entsprechende Aussparungen 36 an dem Kontaktträger 30 eingreifen (siehe Fig. 8), um das Klemmelement 40 an dem Kontaktträger zu sichern.

In Fig. 3 und Fig. 5 kann man deutlich die beiden Klemmabschnitte 41 bzw. 42 sehen, die jeweils mit Schneidelementen 43 bzw. 44 versehen sind.

Der Kontaktträger 30 weist an seinem dem Lichtwellenleiter 10 abgewandten Ende einen Rohransatz 32 mit einem nach außen ragenden Wulst 33 auf, um in ein entsprechendes Gegensteckerteil, d.h. den bei den anderen beiden Ausführungsbeispielen gezeigten Sockel 60 einzugreifen. Das Rohr 31 weist ein Rohrende 34 auf, das beim Einsetzen des Lichtwellenleitersteckerteils in berührende bzw. fast berührende Anlage mit einem Sende-/Empfangselement tritt.

Die Kappe 20 weist Dichtlippen 21 auf, um das Lichtwellenleitersteckerteil gegen den Lichtwellenleiter 10 abzudichten. Die Kappe 20 umfasst ferner einen Schnapprand 22, der zur Befestigung der Kappe 20 an dem Kontaktträger 30 um ein Rastelement 35 am Ende des Kontaktträgers greift.

Das Klemmteil 40 weist eine Wandung 47 auf, an der der Lichtwellenleiter 10 möglichst dicht anliegt. Das Klemmteil 40 kann transparent oder transluzent ausgebildet sein, damit die richtige Position des Lichtwellenleiters 10 in dem Lichtwellenleitersteckerteil von außen nach erfolgter Montage überprüft und sichergestellt werden kann.

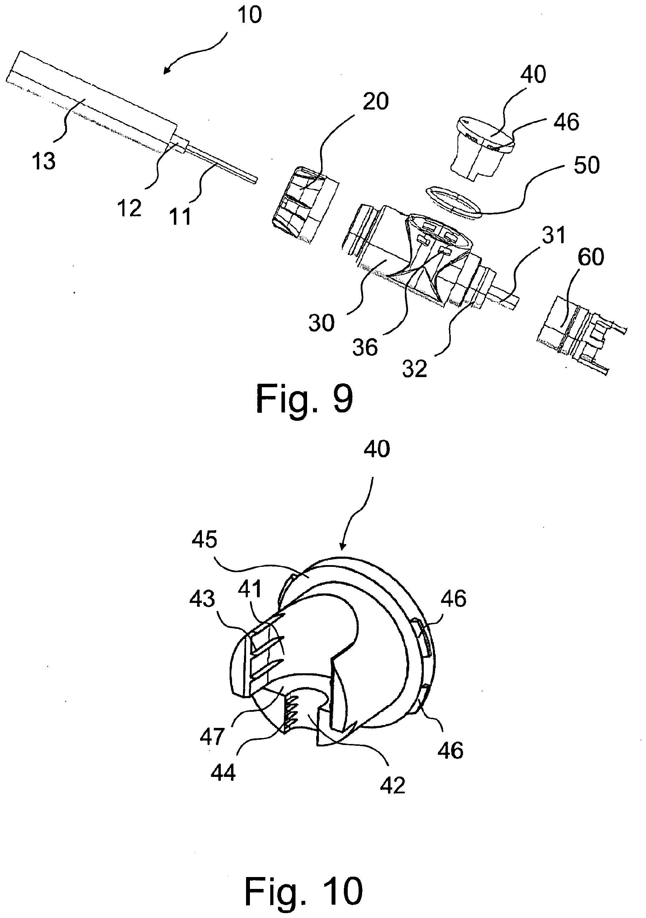

Der Aufbau des Sockels 60 wird anhand des folgenden Ausführungsbeispiels (Figuren 9 bis 14) beschrieben.

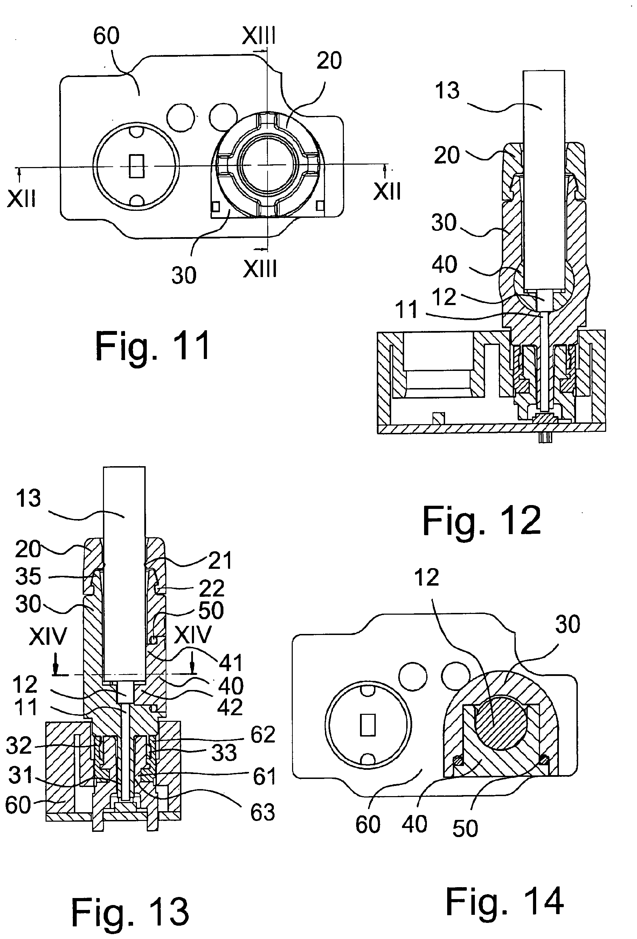

Die Figuren 9 bis 14 zeigen ein zweites Ausführungsbeispiel der Erfindung. Für gleiche bzw. entsprechende Teile werden die gleichen Bezugszeichen verwendet. Wegen der Beschreibung wird auf die Beschreibung des anhand der Figuren 1 bis 8 beschriebenen Ausführungsbeispiels verwiesen. Im übrigen werden nur die Unterschiede zu diesem Ausführungsbeispiel der Erfindung beschrieben:
Das Ausführungsbeispiel der Figuren 9 bis 14 unterscheidet sich im Wesentlichen von dem in den Figuren 1 bis 8 gezeigten durch den Aufbau des Klemmteils 40 und dem das Klemmteil 40 aufnehmenden Kontaktträger 30. Während das Klemmteil 40 des vorherigen Ausführungsbeispiels einen ovalen bzw. elliptischen Querschnitt (siehe Fig. 5) aufweist, hat das Klemmteil 40 des in den Figuren 9 bis 14 gezeigten Ausführungsbeispiels einen runden bzw. kreisförmigen Querschnitt (Fig. 12). Andere Formen sind denkbar. Beispielsweise kann das Klemmteil 40 außen nicht flach sondern gewölbt bzw. entsprechend der Außenkontour des Kontaktträgers 30 ausgebildet sein.

In Fig. 13 ist der Sockel 60 zur Aufnahme des Lichtwellenleitersteckerteils im Querschnitt dargestellt. Der Sockel 60 weist einen Schacht 63 zur Aufnahme des Rohrs 31 des Kontaktträgers 30 auf. Der Schacht 63 wird durch die Sockelwandung 61 gebildet. Der Sockel 60 umfasst ferner einen Schnapprand 62 zur Sicherung des Wulstes 33, der an dem Rohransatz 32 des Kontaktträgers 30 ausgebildet ist.

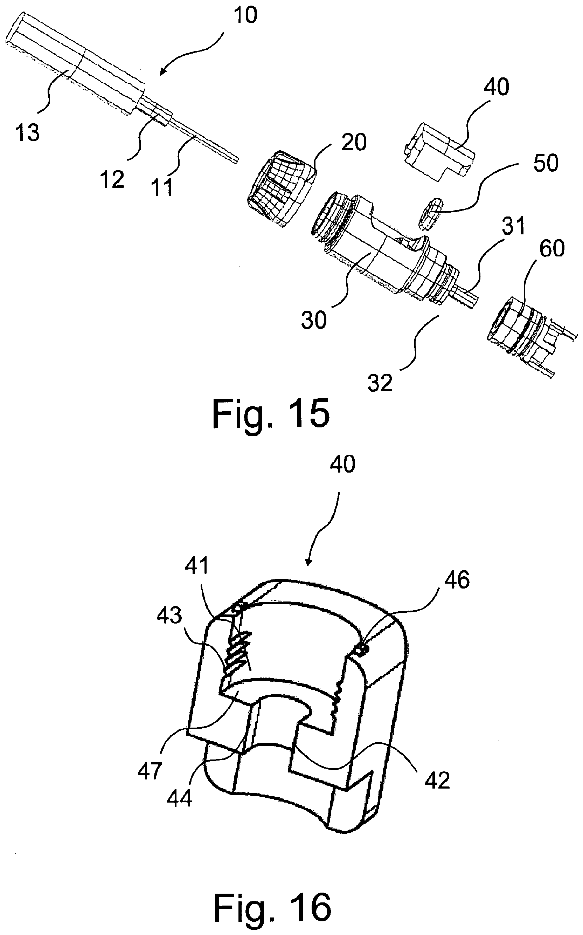

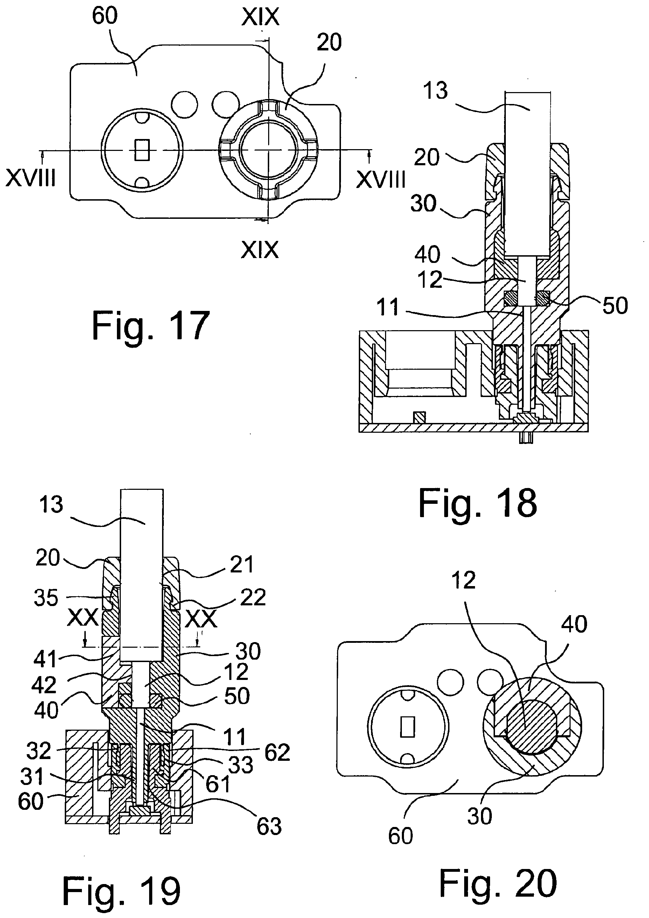

Die Figuren 15 bis 20 zeigen ein drittes Ausführungsbeispiel der Erfindung. Für gleiche bzw. entsprechende Teile werden die gleichen Bezugszeichen verwendet. Wegen der Beschreibung wird auf die Beschreibung des anhand der Figuren 1 bis 8 beschriebenen Ausführungsbeispiels verwiesen. Im übrigen werden nur die Unterschiede zu diesem Ausführungsbeispiel der Erfindung beschrieben:
Die Figuren 15 bis 20 zeigen eine weitere Variante des Klemmteils. Bei diesem Ausführungsbeispiel ist die Dichtung 50 derart angeordnet, dass die Dichtung 50 den Lichtwellenleiter 10 umschließt. Diese Ausführung ergibt gute Ergebnisse, wird aber nicht so sehr bevorzugt, weil prinzipiell Wasser an dem Klemmstück vorbei zwischen Hülle 13 und Isolierung 12 gelangen kann. Daher wird bei dieser Ausführungsform bevorzugt, zusätzlich eine Dichtung zwischen dem Klemmstück 40 und dem Kontaktträger 30 vorzusehen. Diese Ausführung hat desweiteren eine etwas geringere maximale erreichbare Zugentlastung, denn der zweite Klemmabschnitt 42 ist infolge der Dichtungsanordnung des Dichtungselementes 50 kürzerbauend bzw. das Klemmstück ist entsprechend längerbauend als in den anderen beiden oben beschriebenen Ausführungsbeispielen.

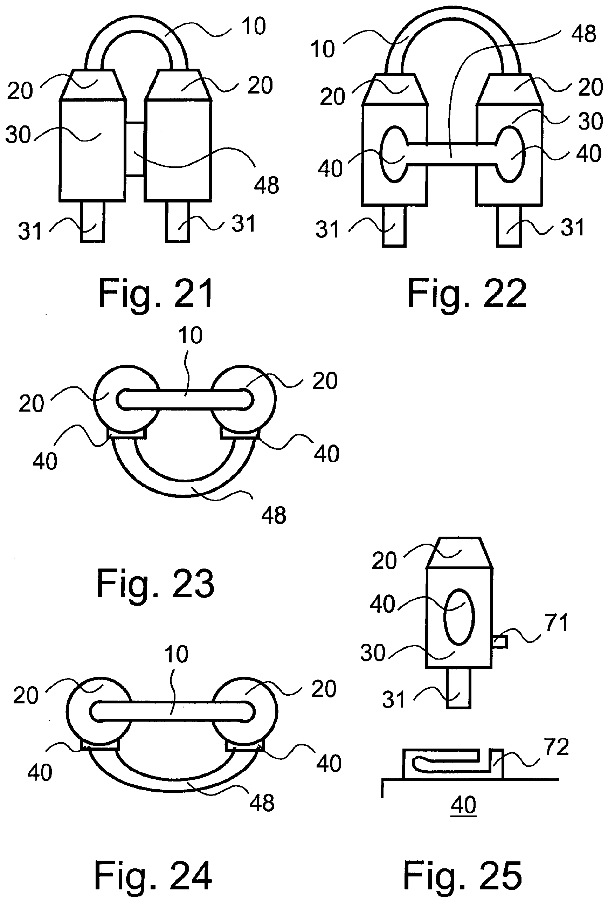

Die Figuren 21 bis 24 zeigen mögliche Varianten eines erfindungsgemäßen Brückensteckers.

In Fig. 21 ist ein Brückenstecker schematisch gezeigt, der zwei erfindungsgemäße Lichtwellenleitersteckerteile aufweist, die über einen Lichtwellenleiter 10 miteinander verbunden sind. Ein Teil dient zum Senden, das andere zum Empfangen. Die beiden Teile weisen jeweils eine Kappe 20 auf, die mit einem Kontaktträger 30 verbunden ist. Die beiden Rohre 31 sind schematisch angedeutet. In den Kontaktträgern 30 sind jeweils und einander gegenüberliegend Klemmteile angeordnet, die vorzugsweise erfindungsgemäß ausgebildet sind und mittels dem Verbindungselement 48 starr miteinander verbunden sind.
Fig. 22 zeigt eine alternative Ausführung eines Brückensteckers, bei dem die Klemmteile 40 parallel zueinander ausgerichtet sind und mit einem starren oder flexiblen Verbindungselement 48 miteinander verbunden sind.
Die Figuren 23 und 24 zeigen einen Brückenstecker mit einem flexiblen Verbindungselement 48 zur Verbindung der beiden Klemmstücke, wobei Fig. 23 das flexible Verbindungselement 48 "zusammengezogen" bzw. gestaucht zeigt, während Fig. 24 das flexible Verbindungselement 48 gestreckt zeigt. Durch das flexible Verbindungselement 48 ist der Abstand der beiden Lichtwellenleitersteckerteile variabel und kann sich an verschiedene Umgebungen anpassen.
Fig. 25 zeigt schematisch ein erfindungsgemäßes Lichtwellenleitersteckerteil mit einem Bajonettverschluss, der einen Zapfen 71 und ein Aufnahmeteil 72 an dem Sockel 60 aufweist. Andere dem Fachmann bekannte und naheliegende Alternativen für die Befestigung des Lichtwellenleitersteckerteils an dem Sockel sind denkbar.
Es ist klar, dass dem Fachmann beim Studium der Unterlagen naheliegende Alternativen und äquivalente Lösungen auch einfallen können. Die Erfindung ist in den Ansprüchen definiert.

## Patentansprüche

1. Lichtwellenleitersteckerteil eines Lichtwellenleitersteckverbinders für einen Lichtwellenleiter, der eine Faser mit einem Kern (11) und einer Faserisolierung (12) sowie eine Hülle (13) aufweist, mit einem Kontaktträger (30) mit einem Rohr (31) zur Aufnahme des Lichtwellenleiters mit einem Rohr (31), das einen ersten Abschnitt zum Eingriff des Lichtwellenleiters, einen zweiten Abschnitt zum Eingriff der Faser (11, 12) und einen dritten Abschnitt zum Eingriff des Kerns (11) der Faser aufweist, und zumindest einem Klemmteil (40) zum Sichern der Lichtwellenleiters in dem Kontaktträger (30), wobei das Klemmteil (40) einen ersten Klemmabschnitt (41) zum Klemmen der Hülle (13) des Lichtwellenleiters und einen zweiten Klemmabschnitt (42) zum Klemmen der Faser (11) des Lichtwellenleiters aufweist,
**dadurch gekennzeichnet, dass**
der Kontaktträger (30) im Bereich des ersten und zweiten Abschnitts des Rohrs (31) eine seitliche Öffnung zur Aufnahme des zumindest einen Klemmteils (40) aufweist,
wobei der erste Klemmabschnitt des Klemmteils (40) Schneidelemente (43) zum Schneiden in die Hülle (13) des Lichtwellenleiters und der zweite Klemmabschnitt des Klemmteils (40) Schneidelemente (44) zum Schneiden in die Faser (11) des Lichtwellenleiters aufweist.

2. Lichtwellenleitersteckerteil nach Anspruch 1, **dadurch gekennzeichnet, dass** die Schneidelemente (43, 44) im Wesentlichen senkrecht zur der Richtung verlaufen, in der der Lichtwellenleiter in das Lichtwellenleitersteckerteil einsteckbar bzw. eingesteckt ist.

3. Lichtwellenleitersteckerteil nach einem der vorhergehenden Ansprüche, bei dem die Schneidelemente (43, 44) im Querschnitt ein widerhakenartiges Profil aufweisen.

4. Lichtwellenleitersteckerteil nach einem der vorhergehenden Ansprüche, **dadurch gekennzeichnet, dass** das Klemmteil (40) und/oder der Kontaktträger (30) zumindest teilweise transparent und/oder transluzent ausgebildet sind.

5. Lichtwellenleitersteckerteil nach einem der vorhergehenden Ansprüche, **dadurch gekennzeichnet, dass** das Klemmteil (40) vollständig transparent und/oder transluzent ausgebildet ist.

6. Lichtwellenleitersteckerteil nach einem der vorhergehenden Ansprüche, **dadurch gekennzeichnet, dass** der Kontaktträger (30) zumindest in dem Bereich der Aufnahmeabschnitts für das Klemmteil (40) transparent und/oder transluzent ausgebildet ist.

7. Lichtwellenleitersteckerteil nach einem der vorhergehenden Ansprüche, **dadurch gekennzeichnet, dass** das Klemmteil (40) und/oder der Kontaktträger (30) zur Kennzeichnung der Position des Lichtwellenleiters in dem Lichtwellenleitersteckerteil farblich markiert ist.

8. Lichtwellenleitersteckerteil nach einem der vorhergehenden Ansprüche, **dadurch gekennzeichnet, dass** an dem Klemmteil (40) zumindest eine Dichtung (50) angeordnet ist.

9. Lichtwellenleitersteckerteil nach dem vorhergehenden Anspruch, **dadurch gekennzeichnet, dass** die Dichtung (50) eine O-Ringdichtung (50) ist.

10. Lichtwellenleitersteckerteil nach einem der vorhergehenden Ansprüche, **dadurch gekennzeichnet, dass** das Klemmteil (40) einen Flansch (45) zur Aufnahme der Dichtung (50) aufweist.

11. Lichtwellenleitersteckerteil nach einem der vorhergehenden Ansprüche, **dadurch gekennzeichnet, dass** das Klemmteil (40) eine Nut zur Aufnahme der Dichtung (50) aufweist.

12. Lichtwellenleitersteckerteil nach einem der vorhergehenden Ansprüche, **dadurch gekennzeichnet, dass** der Kontaktträger (30) eine Nut zur Aufnahme der Dichtung (50) aufweist.

13. Lichtwellenleitersteckerteil nach einem der vorhergehenden Ansprüche, **dadurch gekennzeichnet, dass** der Kontaktträger (30) eine Stufe zur Aufnahme der Dichtung (50) aufweist.

14. Lichtwellenleitersteckerteil nach einem der vorhergehenden Ansprüche, **dadurch gekennzeichnet, dass** die Dichtung (50) entlang der Öffnung des Kontaktträger (30)s angeordnet ist, in der das Klemmteil (40) zur Sicherung des Lichtwellenleiters angeordnet ist bzw. anordbar ist.

15. Lichtwellenleitersteckerteil nach einem der vorhergehenden Ansprüche, **dadurch gekennzeichnet, dass** eine weitere Dichtung vorgesehen ist, die derart angeordnet ist, dass die Faser (11) des Lichtwellenleiters durch die Dichtung (50) steckbar ist.

16. Lichtwellenleitersteckerteil nach einem der vorhergehenden Ansprüche, **dadurch gekennzeichnet, dass** die Außenkontur des Klemmteils (40) im Wesentlichen der Außenkontur des Kontaktträgers (30) entspricht.

17. Lichtwellenleitersteckerteil nach einem der vorhergehenden Ansprüche, **dadurch gekennzeichnet, dass** die Außenkontur des Klemmteils (40) im Wesentlichen flach ausgebildet ist.

18. Lichtwellenleitersteckerteil nach einem der vorhergehenden Ansprüche, **dadurch gekennzeichnet, dass** die Außenkontur des Klemmteils (40) gewölbt ist.

19. Lichtwellenleitersteckerteil nach einem der vorhergehenden Ansprüche, **dadurch gekennzeichnet, dass** der Kontaktträger (30) einen Querschnitt aufweist, der im Wesentlichen rund, oval, ellipsenförmig, rechteckig (vorzugsweise mit abgerundeten Ecken) ist.

20. Lichtwellenleitersteckerteil nach einem der vorhergehenden Ansprüche, **dadurch gekennzeichnet, dass** der Kontaktträger (30) einen Querschnitt aufweist, der asymmetrisch ist.

21. Lichtwellenleitersteckerteil nach einem der vorhergehenden Ansprüche, **dadurch gekennzeichnet, dass** die Faser (11) einen Kern aus optisch transparenten Material geringer Dämpfung und einen den Kern umschließenden Mantel aufweist, der eine niedrigere Brechzahl als der Kern hat, wobei vorzugsweise um den Mantel eine Isolierung vorgesehen ist.

22. Lichtwellenleitersteckerteil nach dem vorhergehenden Anspruch, **dadurch gekennzeichnet, dass** der Kern aus Kunststoff oder Glas ausgebildet ist.

23. Lichtwellenleitersteckerteil nach einem der vorhergehenden Ansprüche, **dadurch gekennzeichnet, dass** der Kontaktträger (30) ein Rohr (31) aufweist, das vorzugsweise zur Aufnahme der Faser (11) bzw. des Kerns der Faser (11) des Lichtwellenleiters ausgebildet ist.

24. Lichtwellenleitersteckerteil nach einem der vorhergehenden Ansprüche, **dadurch gekennzeichnet, dass** das das Lichtwellenleitersteckerteil eine Kappe (20) aufweist, die eine Durchtrittsöffnung für den Lichtwellenleiter aufweist und vorzugsweise wasserdicht mit dem Kontaktträger (30) verbindbar ist.

25. Lichtwellenleitersteckerteil nach einem der vorhergehenden Ansprüche, **dadurch gekennzeichnet, dass** das Lichtwellenleitersteckerteil mit einem Gegensteckerteil (60) zusammensteckbar ist.

26. Lichtwellenleitersteckerteil nach einem der vorhergehenden Ansprüche, **dadurch gekennzeichnet, dass** Lichtwellenleitersteckerteil den bzw. die Zapfen (71) oder ein Aufnahmeteil (72) eines Bajonettverschlusses aufweist.

27. Lichtwellenleitersteckerteil nach einem der vorhergehenden Ansprüche, **dadurch gekennzeichnet, dass** das Klemmteil (40) aus Metall und/oder Kunststoff ausgebildet ist.

28. Lichtwellenleitersteckerteil nach einem der vorhergehenden Ansprüche, **dadurch gekennzeichnet, dass** das Klemmteil (40) ein Druckgussteil ist.

29. Lichtwellenleitersteckerteil nach einem der vorhergehenden Ansprüche, **dadurch gekennzeichnet, dass** der Kontaktträger (30) aus Metall und/oder Kunststoff ausgebildet ist.

30. Lichtwellenleitersteckerteil nach einem der vorhergehenden Ansprüche, **dadurch gekennzeichnet, dass** das Klemmteil (40) einen Klemmabschnitt zum Klemmen der Faser (11) des Lichtwellenleiters aufweist.

31. Lichtwellenleitersteckerteil nach einem der vorhergehenden Ansprüche, **dadurch gekennzeichnet, dass** die Kappe und der Kontaktträger (30) als ein Teil ausgebildet sind.

32. Lichtwellenleitersteckerteil nach einem der vorhergehenden Ansprüche, **dadurch gekennzeichnet, dass** das Klemmteil (40) und die Dichtung (50) als ein Teil ausgebildet sind.

33. Lichtwellenleitersteckerteil nach einem der vorhergehenden Ansprüche, **dadurch gekennzeichnet, dass** der Kontaktträger (30) und die Dichtung (50) als ein Teil ausgebildet sind.

34. Lichtwellenleitersteckerteil nach einem der vorhergehenden Ansprüche, **dadurch gekennzeichnet, dass** der Kontaktträger (30) Gewindeabschnitte zum Einschrauben der Hülle (13) und/oder der Faser (11) des Lichtwellenleiters aufweist.

35. Brückenstecker mit mindestens einem Lichtwellenleitersteckerteil nach einem der vorhergehenden Ansprüche.

36. Brückenstecker nach dem vorhergehenden Anspruch mit zwei Lichtwellenleitersteckerteilen nach einem der vorhergehenden Ansprüche.

37. Brückenstecker nach dem vorhergehenden Anspruch, **dadurch gekennzeichnet, dass** die Klemmteile (40) der beiden Lichtwellenleitersteckerteile miteinander verbunden sind.

38. Brückenstecker nach einem der beiden vorhergehenden Ansprüche, **dadurch gekennzeichnet, dass** die Klemmteile (40) der beiden Lichtwellenleitersteckerteile einstückig ausgebildet sind.

39. Brückenstecker nach einem der drei vorhergehenden Ansprüche, **dadurch gekennzeichnet, dass** die Klemmteile (40) der beiden Lichtwellenleitersteckerteile starr miteinander verbunden sind.

40. Brückenstecker nach einem der vier vorhergehenden Ansprüche, **dadurch gekennzeichnet, dass** die Klemmteile (40) der beiden Lichtwellenleitersteckerteile gegenüberliegend angeordnet sind.

41. Brückenstecker nach einem der Ansprüche 36 bis 38, **dadurch gekennzeichnet, dass** die Klemmteile (40) der beiden Lichtwellenleitersteckerteile flexibel miteinander verbunden sind.

42. Lichtwellenleitersteckverbinder mit einem Lichtwellenleitersteckerteil nach einem der Ansprüche 1 bis 34 und einem Gegensteckerteil.

43. Lichtwellenleitersteckverbinder nach dem vorhergehenden Anspruch, **dadurch gekennzeichnet, dass** das Gegensteckerteil einen Schacht zur Aufnahme des Rohrs bzw. des Kerns des Lichtwellenleiters aufweist.

## Claims

1. Optical waveguide plug part of an optical waveguide plug connector for an optical waveguide which has a fibre with a core (11) and with a fibre insulator (12) and a sheath (13), having a contact carrier (30) with a tube (31) for receiving the optical waveguide with a tube (31) which has a first section for the engagement of the optical waveguide, a second section for the engagement of the fibre (11, 12) and a third section for the engagement of the core (11) of the fibre, and having at least one clamping part (40) for securing the optical waveguide in the contact carrier (30), wherein the clamping part (40) has a first clamping section (41) for clamping the sheath (13) of the optical waveguide and has a second clamping section (42) for clamping the fibre (11) of the optical waveguide,
**characterized in that**
the contact carrier (30) has, in the region of the first and second sections of the tube (31), a lateral opening for receiving the at least one clamping part (40),
wherein the first clamping section of the clamping part (40) has cutting elements (43) for cutting into the sheath (13) of the optical waveguide, and the second clamping section of the clamping part (40) has cutting elements (44) for cutting into the fibre (11) of the optical waveguide.

2. Optical waveguide plug part according to Claim 1,
**characterized in that** the cutting elements (43, 44) run substantially perpendicular to the direction in which the optical waveguide is insertable or inserted into the optical waveguide plug part.

3. Optical waveguide plug part according to one of the preceding claims, in which the cutting elements (43, 44) have a barb-like profile in cross section.

4. Optical waveguide plug part according to one of the preceding claims, **characterized in that** the clamping part (40) and/or the contact carrier (30) are of at least partially transparent and/or translucent form.

5. Optical waveguide plug part according to one of the preceding claims, **characterized in that** the clamping part (40) is of fully transparent and/or translucent form.

6. Optical waveguide plug part according to one of the preceding claims, **characterized in that** the contact carrier (30) is of transparent and/or translucent form at least in the region of the receiving section for the clamping part (40).

7. Optical waveguide plug part according to one of the preceding claims, **characterized in that** the clamping part (40) and/or the contact carrier (30) has a colour marking for indicating the position of the optical waveguide in the optical waveguide plug part.

8. Optical waveguide plug part according to one of the preceding claims, **characterized in that** at least one seal (50) is arranged on the clamping part (40).

9. Optical waveguide plug part according to the preceding claim, **characterized in that** the seal (50) is an O-ring seal (50).

10. Optical waveguide plug part according to one of the preceding claims, **characterized in that** the clamping part (40) has a flange (45) for receiving the seal (50).

11. Optical waveguide plug part according to one of the preceding claims, **characterized in that** the clamping part (40) has a groove for receiving the seal (50) .

12. Optical waveguide plug part according to one of the preceding claims, **characterized in that** the contact carrier (30) has a groove for receiving the seal (50).

13. Optical waveguide plug part according to one of the preceding claims, **characterized in that** the contact carrier (30) has a step for receiving the seal (50).

14. Optical waveguide plug part according to one of the preceding claims, **characterized in that** the seal (50) is arranged along that opening of the contact carrier (30) in which the clamping part (40) is or can be arranged for the purposes of securing the optical waveguide.

15. Optical waveguide plug part according to one of the preceding claims, **characterized in that** a further seal is provided which is arranged such that the fibre (11) of the optical waveguide can be inserted through the seal (50).

16. Optical waveguide plug part according to one of the preceding claims, **characterized in that** the outer contour of the clamping part (40) substantially corresponds to the outer contour of the contact carrier (30) .

17. Optical waveguide plug part according to one of the preceding claims, **characterized in that** the outer contour of the clamping part (40) is of substantially flat form.

18. Optical waveguide plug part according to one of the preceding claims, **characterized in that** the outer contour of the clamping part (40) is arched.

19. Optical waveguide plug part according to one of the preceding claims, **characterized in that** the contact carrier (30) has a cross section which is substantially round, oval, elliptical, rectangular (preferably with rounded corners).

20. Optical waveguide plug part according to one of the preceding claims, **characterized in that** the contact carrier (30) has a cross section which is asymmetrical.

21. Optical waveguide plug part according to one of the preceding claims, **characterized in that** the fibre (11) has a core composed of optically transparent material with low damping and has a shell which surrounds the core and which has a lower refractive index than the core, wherein an insulator is preferably provided around the shell.

22. Optical waveguide plug part according to the preceding claim, **characterized in that** the core is formed from plastic or glass.

23. Optical waveguide plug part according to one of the preceding claims, **characterized in that** the contact carrier (30) has a tube (31) which is preferably designed for receiving the fibre (11) or the core of the fibre (11) of the optical waveguide.

24. Optical waveguide plug part according to one of the preceding claims, **characterized in that** the optical waveguide plug part has a cap (20) which has a passage opening for the optical waveguide and which is preferably connectable in water-tight fashion to the contact carrier (30).

25. Optical waveguide plug part according to one of the preceding claims, **characterized in that** the optical waveguide plug part can be plugged together with a counterpart plug part (60).

26. Optical waveguide plug part according to one of the preceding claims, **characterized in that** the optical waveguide plug part has the one or more studs (71) or a receiving part (72) of a bayonet fastener.

27. Optical waveguide plug part according to one of the preceding claims, **characterized in that** the clamping part (40) is formed from metal and/or plastic.

28. Optical waveguide plug part according to one of the preceding claims, **characterized in that** the clamping part (40) is a die-cast part.

29. Optical waveguide plug part according to one of the preceding claims, **characterized in that** the contact carrier (30) is formed from metal and/or plastic.

30. Optical waveguide plug part according to one of the preceding claims, **characterized in that** the clamping part (40) has a clamping section for clamping the fibre (11) of the optical waveguide.

31. Optical waveguide plug part according to one of the preceding claims, **characterized in that** the cap and the contact carrier (30) are formed as one part.

32. Optical waveguide plug part according to one of the preceding claims, **characterized in that** the clamping part (40) and the seal (50) are formed as one part.

33. Optical waveguide plug part according to one of the preceding claims, **characterized in that** the contact carrier (30) and the seal (50) are formed as one part.

34. Optical waveguide plug part according to one of the preceding claims, **characterized in that** the contact carrier (30) has thread sections for the screwing-in of the sheath (13) and/or of the fibre (11) of the optical waveguide.

35. Bridging plug having at least one optical waveguide plug part according to one of the preceding claims.

36. Bridging plug according to the preceding claim, having two optical waveguide plug parts according to one of the preceding claims.

37. Bridging plug according to the preceding claim, **characterized in that** the clamping parts (40) of the two optical waveguide plug parts are connected to one another.

38. Bridging plug according to one of the two preceding claims, **characterized in that** the clamping parts (40) of the two optical waveguide plug parts are formed in one piece.

39. Bridging plug according to one of the three preceding claims, **characterized in that** the clamping parts (40) of the two optical waveguide plug parts are connected to one another rigidly.

40. Bridging plug according to one of the four preceding claims, **characterized in that** the clamping parts (40) of the two optical waveguide plug parts are arranged opposite one another.

41. Bridging plug according to one of Claims 36 to 38, **characterized in that** the clamping parts (40) of the two optical waveguide plug parts are connected to one another flexibly.

42. Optical waveguide plug connector having an optical waveguide plug part according to one of Claims 1 to 34 and having a counterpart plug part.

43. Optical waveguide plug connector according to the preceding claim, **characterized in that** the counterpart plug part has a slot for receiving the tube or the core of the optical waveguide.

## Revendications

1. Élément formant fiche de câble optique d'un connecteur de câble optique comportant une fibre dotée d'un coeur (11) et une isolation en fibres (12) ainsi qu'une enveloppe (13), doté d'un support de contact (30) doté d'un tube (31) destiné à accueillir le câble optique avec un tube (31), comprenant une première section pour la prise du câble optique, une deuxième section pour la prise de la fibre (11, 12) et une troisième section pour la prise du coeur de la fibre (11), et au moins une pièce de serrage (40) destinée à assurer le câble optique dans le support de contact (30), dans lequel la pièce de serrage (40) comporte une première section de serrage (41) destinée au serrage de l'enveloppe (13) du câble optique et une deuxième section de serrage (42) destinée au serrage de la fibre (11) du câble optique, **caractérisé en ce que** le support de contact (30) comporte dans la zone de la première et de la deuxième section du tube (31) une ouverture latérale destinée à accueillir au moins une pièce de serrage (40), dans lequel la première section de la pièce de serrage (40) comporte des éléments coupants (43) destinés à couper l'enveloppe (13) du câble optique et la deuxième section de la pièce de serrage (40) comporte des éléments coupants (44) destinés à couper la fibre (11) du câble optique.

2. Élément formant fiche de câble optique selon la revendication 1, **caractérisé en ce que** les éléments coupants (43, 44) sont disposés de manière essentiellement perpendiculaire à la direction dans laquelle le câble optique est inséré ou insérable dans l'élément formant fiche.

3. Élément formant fiche de câble optique selon l'une des revendications précédentes, dont les éléments coupants (43, 44) présentent un profil de contre-crochet.

4. Élément formant fiche de câble optique selon l'une des revendications précédentes, **caractérisé en ce que** la pièce de serrage (40) et/ou le support de contact (30) sont réalisés au moins partiellement de manière transparente et/ou translucide.

5. Élément formant fiche de câble optique selon l'une des revendications précédentes, **caractérisé en ce que** la pièce de serrage (40) est réalisée dans sa totalité de manière transparente et/ou translucide.

6. Élément formant fiche de câble optique selon l'une des revendications précédentes, **caractérisé en ce que** le support de contact (30) est réalisé de manière transparente et/ou translucide au moins dans la zone de la section d'accueil de la pièce de serrage (40).

7. Élément formant fiche de câble optique selon l'une des revendications précédentes, **caractérisé en ce que** la pièce de serrage (40) et/ou le support de contact (30) possèdent un marquage de couleur afin de caractériser la position du câble optique dans l'élément formant fiche.

8. Élément formant fiche de câble optique selon l'une des revendications précédentes, **caractérisé en ce qu'**au moins un joint (50) est agencé sur la pièce de serrage (40) .

9. Élément formant fiche de câble optique selon l'une des revendications précédentes, **caractérisé en ce que** le joint (50) est un joint annulaire (50).

10. Élément formant fiche de câble optique selon l'une des revendications précédentes, **caractérisé en ce que** la pièce de serrage (40) comporte une collerette (45) destinée à accueillir le joint (50).

11. Élément formant fiche de câble optique selon l'une des revendications précédentes, **caractérisé en ce que** la pièce de serrage (40) comporte une rainure destinée à accueillir le joint (50).

12. Élément formant fiche de câble optique selon l'une des revendications précédentes, **caractérisé en ce que** le support de contact (30) comporte une rainure destinée à accueillir le joint (50).

13. Élément formant fiche de câble optique selon l'une des revendications précédentes, **caractérisé en ce que** le support de contact (30) comporte un palier destiné à accueillir le joint (50).

14. Élément formant fiche de câble optique selon l'une des revendications précédentes, **caractérisé en ce que** le joint (50) est agencé le long de l'ouverture du support de contact (30), la pièce de serrage (40) étant ou pouvant être agencée dans celle-ci pour assurer le câble optique.

15. Élément formant fiche de câble optique selon l'une des revendications précédentes, **caractérisé en ce qu'**un joint supplémentaire est prévu, agencé de telle manière que la fibre (11) du câble optique est enfichable au travers du joint (50).

16. Élément formant fiche de câble optique selon l'une des revendications précédentes, **caractérisé en ce que** le contour extérieur de la pièce de serrage (40) correspond essentiellement au contour extérieur du support de contact (30).

17. Élément formant fiche de câble optique selon l'une des revendications précédentes, **caractérisé en ce que** le contour extérieur de la pièce de serrage (40) est réalisé de manière essentiellement plate.

18. Élément formant fiche de câble optique selon l'une des revendications précédentes, **caractérisé en ce que** le contour extérieur de la pièce de serrage (40) est voûté.

19. Élément formant fiche de câble optique selon l'une des revendications précédentes, **caractérisé en ce que** le support de contact (30) présente un profil essentiellement rond, ovale, ellipsoïde, rectangulaire (de préférence avec des angles arrondis).

20. Élément formant fiche de câble optique selon l'une des revendications précédentes, **caractérisé en ce que** le support de contact (30) présente un profil asymétrique.

21. Élément formant fiche de câble optique selon l'une des revendications précédentes, **caractérisé en ce que** la fibre (11) comporte un coeur fait de matériau optiquement transparent et d'atténuation faible et une gaine entourant le coeur, possédant un indice de réfraction inférieur à celui du coeur, dans lequel une isolation est de préférence prévue autour de la gaine.

22. Élément formant fiche de câble optique selon l'une des revendications précédentes, **caractérisé en ce que** le joint est réalisé en plastique ou en verre.

23. Élément formant fiche de câble optique selon l'une des revendications précédentes, **caractérisé en ce que** le support de contact (30) comporte un tube (31), réalisé de préférence pour accueillir la fibre (11) ou le coeur de la fibre (11) du câble optique.

24. Élément formant fiche de câble optique selon l'une des revendications précédentes, **caractérisé en ce que** l'élément formant fiche de câble optique comporte un cache (20), comportant une ouverture de passage pour le câble optique et pouvant de préférence être raccordée de manière étanche au support de contact (30).

25. Élément formant fiche de câble optique selon l'une des revendications précédentes, **caractérisé en ce que** l'élément formant fiche de câble optique est enfichable dans un élément de contre-fiche (60).

26. Élément formant fiche de câble optique selon l'une des revendications précédentes, **caractérisé en ce que** l'élément formant fiche de câble optique comporte soit le tenon (71), soit la pièce d'accueil (72) d'une fermeture à baïonnette.

27. Élément formant fiche de câble optique selon l'une des revendications précédentes, **caractérisé en ce que** la pièce de serrage (40) est réalisée en métal et/ou en plastique.

28. Élément formant fiche de câble optique selon l'une des revendications précédentes, **caractérisé en ce que** la pièce de serrage (40) est une pièce moulée sous pression.

29. Élément formant fiche de câble optique selon l'une des revendications précédentes, **caractérisé en ce que** le support de contact (30) est réalisé en métal et/ou en plastique.

30. Élément formant fiche de câble optique selon l'une des revendications précédentes, **caractérisé en ce que** la pièce de serrage (40) comporte une section de serrage destinée à serrer la fibre (11) du câble optique.

31. Élément formant fiche de câble optique selon l'une des revendications précédentes, **caractérisé en ce que** le cache et le support de contact (30) sont réalisés comme une pièce unique.

32. Élément formant fiche de câble optique selon l'une des revendications précédentes, **caractérisé en ce que** la pièce de serrage (40) et le joint (50) sont réalisés comme une pièce unique.

33. Élément formant fiche de câble optique selon l'une des revendications précédentes, **caractérisé en ce que** le support de contact (30) et le joint (50) sont réalisés comme une pièce unique.

34. Élément formant fiche de câble optique selon l'une des revendications précédentes, **caractérisé en ce que** le support de contact (30) comporte des sections filetées destinées à visser l'enveloppe (13) et/ou la fibre (11) du câble optique.

35. Connecteur en pont doté d'au moins un élément formant fiche de câble optique selon l'une des revendications précédentes.

36. Connecteur en pont selon la revendication précédente doté de deux éléments formant fiche de câble optique selon l'une des revendications précédentes.

37. Connecteur en pont selon la revendication précédente, **caractérisé en ce que** les pièces de serrage (40) des deux éléments formant fiche de câble optique sont raccordées l'une à l'autre.

38. Connecteur en pont selon l'une des deux revendications précédentes, **caractérisé en ce que** les pièces de serrage (40) des deux éléments formant fiche de câble optique sont réalisées d'une pièce.

39. Connecteur en pont selon l'une des trois revendications précédentes, **caractérisé en ce que** les pièces de serrage (40) des deux éléments formant fiche de câble optique sont raccordées l'une à l'autre de manière rigide.

40. Connecteur en pont selon l'une des quatre revendications précédentes, **caractérisé en ce que** les pièces de serrage (40) des deux éléments formant fiche de câble optique sont agencées de manière opposée l'une à l'autre.

41. Connecteur en pont selon l'une des revendications 36 à 38, **caractérisé en ce que** les pièces de serrage (40) des deux éléments formant fiche de câble optique sont raccordées l'une à l'autre de manière flexible.

42. Connecteur de câble optique doté d'un élément formant fiche de câble optique selon l'une des revendications 1 à 34 et d'un élément de contre-fiche.

43. Connecteur de câble optique selon la revendication précédente, **caractérisé en ce que** l'élément de contre-fiche comporte un puits destiné à accueillir le tube ou le coeur du câble optique.
